(19) Europäisches Patentamt
European Patent Office
Office européen des brevets

(11) **EP 4 216 051 B1**

(12) **EUROPEAN PATENT SPECIFICATION**

(45) Date of publication and mention
of the grant of the patent:
**31.07.2024   Bulletin 2024/31**

(21) Application number: **23173374.2**

(22) Date of filing: **15.05.2023**

(51) International Patent Classification (IPC):
**G06F 7/483** *(2006.01)*        **G06F 7/544** *(2006.01)*

(52) Cooperative Patent Classification (CPC):
**G06F 7/5443; G06F 7/483; G06F 17/16;**
G06F 2207/3824; G06N 3/063

(54) **COMPUTING METHOD AND APPARATUS, CHIP, ELECTRONIC DEVICE, AND STORAGE MEDIUM**

BERECHNUNGSVERFAHREN UND -VORRICHTUNG, CHIP, ELEKTRONISCHE VORRICHTUNG UND SPEICHERMEDIUM

PROCÉDÉ ET APPAREIL DE CALCUL, PUCE, DISPOSITIF ÉLECTRONIQUE ET SUPPORT DE STOCKAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.05.2022   CN 202210553451**

(43) Date of publication of application:
**26.07.2023   Bulletin 2023/30**

(73) Proprietor: **KunlunXin Technology (Beijing) Company Limited**
**Haidian District**
**Beijing 100101 (CN)**

(72) Inventors:
• WU, Peng
  **Beijing, 100101 (CN)**
• OUYANG, Jian
  **Beijing, 100101 (CN)**

(74) Representative: **von Tietzen und Hennig, Nikolaus**
**Lorenz Seidler Gossel**
**Rechtsanwälte Patentanwälte**
**Partnerschaft mbB**
**Widenmayerstraße 23**
**80538 München (DE)**

(56) References cited:
EP-A1- 3 857 353        EP-B1- 3 857 353
US-A1- 2019 294 415        US-A1- 2021 312 012

**Description**

TECHNICAL FIELD

The present disclosure relates to the technical field of computers, and in particular, to the technical field of chips and artificial intelligence, and specifically, to a computing method and apparatus, a chip, an electronic device, a computer-readable storage medium, and a computer program product.

BACKGROUND

With the development of artificial intelligence technologies, more and more applications have achieved much better effects than traditional algorithms based on artificial intelligence technologies. Deep learning is the core technology of artificial intelligence technologies at present. Deep learning is a data intensive algorithm and a computation intensive algorithm, and is also an algorithm that develops quickly in an iterative manner.

Traditional general-purpose processing devices such as a CPU, a GPU, and a DSP are designed for general computing tasks and have shortcomings such as low computing performance and low efficiency when processing deep learning applications, and cannot effectively support large-scale deployment of deep learning algorithms in scenarios such as data centers. An ASIC/FPGA-based deep learning dedicated acceleration device has a hardware structure deeply customized according to the computing feature of deep learning, and therefore can achieve higher computing performance and computing efficiency compared with traditional devices such as a CPU, a GPU, and a DSP.

The methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

SUMMARY

The present disclosure provides a computing method and apparatus, a chip, an electronic device, a computer-readable storage medium, and a computer program product.

According to an aspect of the present disclosure, a computing method executed by a computing apparatus is provided, including: based on a plurality of first floating point numbers of a first vector and a plurality of second floating point numbers of a second vector that are input to a computing apparatus, obtaining a plurality of first fixed point numbers in binary representation and a plurality of first exponents that correspond to the plurality of first floating point numbers, and a plurality of second fixed point numbers in binary representation and a plurality of second exponents that correspond to the plurality of second floating point numbers, where the plurality of first floating point numbers and the plurality of second floating point numbers are in a one-to-one correspondence, and each of the plurality of first fixed point number and the plurality of second fixed point numbers includes a sign bit and a first preset number of fixed point mantissa bits; obtaining a fixed point product and a fixed point product exponent corresponding to the fixed point product of each first fixed point number of the plurality of first fixed point numbers and a second fixed point number corresponding to the first fixed point number; obtaining a fixed point inner product calculation result of the first vector and the second vector based on a fixed point product exponent corresponding to each of a plurality of fixed point products corresponding to the plurality of first fixed point numbers; and obtaining, based on the fixed point inner product calculation result, a floating point inner product calculation result in a floating point data format corresponding to the fixed point inner product calculation result.

According to another aspect of the present disclosure, a computing method executed by a computing apparatus is provided, including: obtaining a first matrix and a second matrix, where the first matrix includes a first number of row vectors, the second matrix includes a second number of column vectors, and the row vector and the column vector have a same length; and obtaining an inner product result of each row vector in the first matrix and each column vector in the second matrix according to the above computing method executed by the computing apparatus to calculate an inner product of vectors, to obtain an inner product result matrix of the first matrix and the second matrix.

According to another aspect of the present disclosure, a computing apparatus is provided, including: a first obtaining unit configured to: based on a plurality of first floating point numbers of a first vector and a plurality of second floating point numbers of a second vector that are input to a computing apparatus, obtain a plurality of first fixed point numbers in binary representation and a plurality of first exponents that correspond to the plurality of first floating point numbers, and a plurality of second fixed point numbers in binary representation and a plurality of second exponents that correspond to the plurality of second floating point numbers, where the plurality of first floating point numbers and the plurality of second floating point numbers are in a one-to-one correspondence, and each of the plurality of first fixed point number and the plurality of second fixed point numbers includes a sign bit and a first preset number of fixed point mantissa bits; a multiplier configured to obtain a fixed point product of each of the plurality of first fixed point numbers and a second fixed point number corresponding to the first fixed point number, and a corresponding fixed point product exponent; a second obtaining unit configured to obtain a fixed point product and a fixed point product exponent corresponding to the fixed point product of each first fixed point number of the plurality of first fixed point numbers and a second fixed point number corresponding to the first fixed point number; and a third obtaining unit configured to obtain, based on the fixed point inner product calculation result, a floating point inner product calculation result in a floating point data format corresponding to the fixed point inner product calculation result.

According to another aspect of the present disclosure, a computing apparatus is provided, including: a fourth obtaining unit configured to obtain a first matrix and a second matrix, where the first matrix includes a first number of row vectors, the second matrix includes a second number of column vectors, and the row vector and the column vector have a same length; and a fifth obtaining unit configured to obtain an inner product result of each row vector in the first matrix and each column vector in the second matrix according to the above computing method executed by the computing apparatus to calculate an inner product of vectors, to obtain an inner product result matrix of the first matrix and the second matrix.

According to another aspect of the present disclosure, a chip is provided, including at least one of the following apparatuses: the above computing apparatus for calculating an inner product of vectors and the above computing apparatus for calculating an inner product of matrices.

According to another aspect of the present disclosure, an electronic device is provided, including the above chip.

According to another aspect of the present disclosure, an electronic device is provided, including: at least one processor; and a memory communicatively connected to the at least one processor, where the memory stores instructions executable by the at least one processor, and when executed by the at least one processor, the instructions cause the at least one processor to perform the above computing method for calculating an inner product of vectors or the above computing method for calculating an inner product of matrices.

According to another aspect of the present disclosure, a non-transitory computer-readable storage medium storing computer instructions is provided, where the computer instructions are used to cause a computer to perform the above computing method for calculating an inner product of vectors or the above computing method for calculating an inner product of matrices.

According to another aspect of the present disclosure, a computer program product is provided, including a computer program, where when the computer program is executed by a processor, the above operation method for calculating an inner product of vectors or the above operation method for calculating an inner product of matrices is implemented.

It should be understood that the content described in this section is not intended to identify critical or important features of the embodiments of the present disclosure, and is not used to limit the scope of the present disclosure. Other features of the present disclosure will be easily understood through the following specification.

BRIEF DESCRIPTION OF THE DRAWINGS

The accompanying drawings exemplarily show embodiments and form a part of the specification, and are used to explain exemplary implementations of the embodiments together with a written description of the specification. The embodiments shown are merely for illustrative purposes and do not limit the scope of the claims. Throughout the accompanying drawings, the same reference numerals denote similar but not necessarily same elements.

FIG. 1 is a flowchart of a computing method executed by an computing apparatus according to an embodiment of the present disclosure;

FIG. 2 is a structural block diagram of a vector multiplication apparatus according to an embodiment of the present disclosure;

FIG. 3 is a flowchart of obtaining a plurality of first fixed point numbers, a plurality of first exponents, a plurality of second fixed point numbers, and a plurality of second exponents according to an embodiment of the present disclosure;

FIG. 4 is a flowchart of obtaining fixed point products corresponding to a plurality of first fixed point numbers and corresponding fixed point product exponents according to an embodiment of the present disclosure;

FIG. 5 is a structural block diagram of a vector multiplication apparatus according to another embodiment of the present disclosure;

FIG. 6 is a flowchart of a computing method executed by an computing apparatus to calculate a product of matrices according to an embodiment of the present disclosure;

FIG. 7 is a structural block diagram of a matrix multiplication apparatus according to an embodiment of the present disclosure;

FIG. 8 is a structural block diagram of a computing apparatus for calculating an inner product of vectors according to an embodiment of the present disclosure;

FIG. 9 is a structural block diagram of a computing apparatus for calculating a product of matrices according to an embodiment of the present disclosure; and

FIG. 10 is a structural block diagram of an exemplary electronic device that may be configured to implement an embodiment of the present disclosure.

DETAILED DESCRIPTION

Embodiments of the present disclosure are described below in conjunction with the accompanying drawings, where various details of the embodiments of the present disclosure are included to facilitate understanding, and should only be considered as example. Therefore, those of ordinary skill in the art should be aware that various changes and modifications can be made to the embodiments described herein, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one element from the other. In some examples, a first element and a second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of listed items.

The embodiments of the present disclosure will be described below in detail with reference to the accompanying drawings.

A core operation of a deep learning algorithm is a matrix multiplication operation. A mainstream language model (for example, BERT or ERNIE) includes a large number of matrix multiplication operations. A mainstream machine vision model (a network such as RESNET, MASK-RCNN, YOLO, or SSD) includes a large number of convolution operations that are usually converted into matrix operations for implementation.

In a deep learning network, matrix multiplication operations are all performed based on data in a single precision floating point format (that is, a float format). With the development of deep learning, a relevant technical person finds that for a matrix multiplication operation and a convolution operation, data of fixed point precision such as signed fixed point data of 16 bits can significantly reduce area and power consumption of hardware implementation, achieve a better performance/power consumption ratio and a better performance/area ratio, and ensure no significant loss of precision.

In related technologies, a matrix multiplication operation in a deep learning network may be performed by a matrix multiplication apparatus in a deep learning chip. The matrix multiplication apparatus supports a fixed point operation, but a relevant technical person needs to use an independent apparatus to first convert data of floating point precision to fixed point data through fixed point conversion, and then input the fixed point data to the matrix multiplication apparatus for an operation.

According to an aspect of the present disclosure, a computing method executed by a computing apparatus is provided. Floating point data input into the computing apparatus may be converted into fixed point data through operation in the computing apparatus, and then a vector multiplication operation or a matrix multiplication operation is performed based on the fixed point data, so as to perform a perception-free operation of converting floating point data into fixed point data and reduce labor costs and save computing resources.

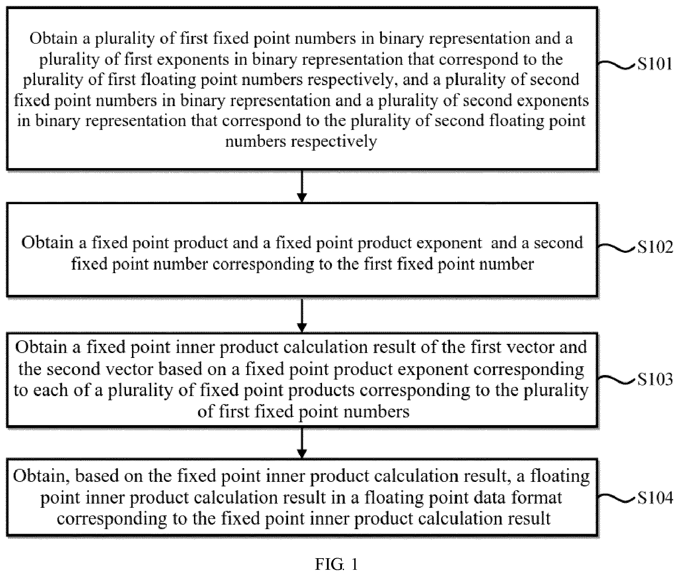

According to an aspect of the present disclosure, as shown in FIG. 1, a computing method executed by a computing apparatus is provided, including: Step S101: Based on a plurality of first floating point numbers of a first vector and a plurality of second floating point numbers of a second vector that are input to a computing apparatus, obtain a plurality of first fixed point numbers in binary representation and a plurality of first exponents that correspond to the plurality of first floating point numbers, and a plurality of second fixed point numbers in binary representation and a plurality of second exponents that correspond to the plurality of second floating point numbers, where the plurality of first floating point numbers and the plurality of second floating point numbers are in a one-to-one correspondence, and each of the plurality of first fixed point number and the plurality of second fixed point numbers includes a sign bit and a first preset number of fixed point mantissa bits. Step S102: Obtain a fixed point product of each of the plurality of first fixed point numbers and a second fixed point number corresponding to the first fixed point number, and a corresponding fixed point product exponent. Step S 103: Obtain a fixed point inner product calculation result of the first vector and the second vector based on a fixed point product exponent corresponding to each of a plurality of fixed point products corresponding to the plurality of first fixed point numbers. Step S104: Obtain, based on the fixed point inner product calculation result, a floating point inner product calculation result in a floating point data format corresponding to the fixed point inner product calculation result.

Therefore, floating point data input into the computing apparatus may be converted into fixed point data through operation in the computing apparatus, and a relevant operation is performed based on the fixed point data, so as to perform a perception-free operation of converting floating point data into fixed point data and reduce labor costs and save computing resources.

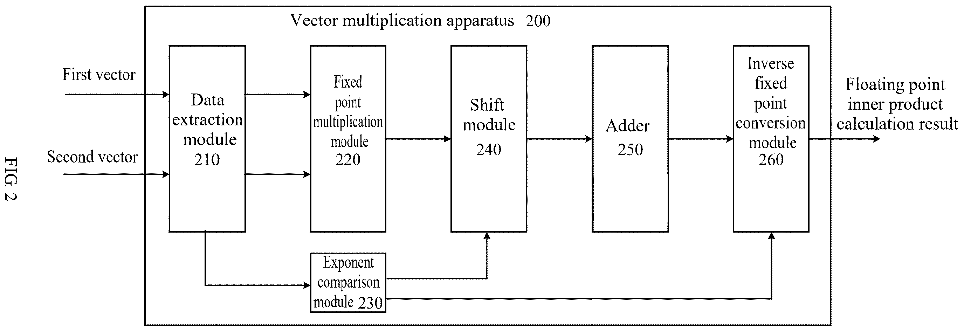

FIG. 2 is a structural block diagram of a vector multiplication apparatus according to an embodiment of the present disclosure.

In some examples of the present application, a vector multiplication apparatus 200 shown in FIG. 2 may be an computing apparatus arranged on a chip, and the above computing method may be performed by the vector multiplication apparatus 200. Specifically, the vector multiplication apparatus 200 includes a data extraction module 210, a fixed point multiplication module 220, an exponent comparison module 230, a shift module 240, an adder 250, and an inverse fixed point conversion module 260.

According to the IEEE 754 standard, single precision floating point data is expressed as {S, E, M}, including 1 sign bit S, 8 exponent bits E, and 23 floating point mantissa bits M. An actual value N of the floating point data may be calculated based on the following formula:

$$N = (-1)^S \times 1.M \times 2^{(E-127)}$$

In some examples of the present application, a first vector A {a[0], a[1], ..., a[k-1]} and a second vector B {b[0], b[1], ..., b[k-1]} are first input into the data extraction module 210 in the vector multiplication apparatus 200 in parallel, where k is a positive integer greater than 2. Each first floating point number a[i] in the first vector A and each second floating point number b[i] in the second vector B are single precision floating point data (where i ∈ [0, k-1]), and have storage formats as described above.

In some examples of the present application, the data extraction module 210 may first process each first floating point number a[k-1] and each second floating point number b[k-1], and convert the first floating point number and the second floating point number into a first fixed point number and a second fixed point number.

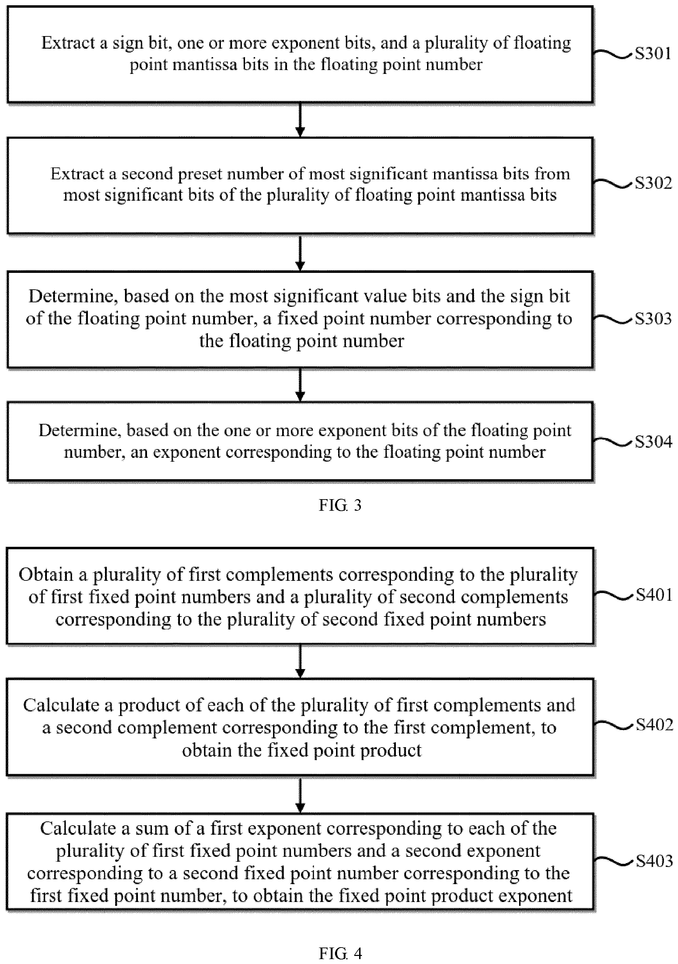

In some examples of the present application, as shown in FIG. 3, the obtaining a plurality of first fixed point numbers in binary representation and a plurality of first exponents that correspond to the plurality of first floating point numbers, and a plurality of second fixed point numbers in binary representation and a plurality of second exponents that correspond to the plurality of second floating point numbers includes: for each of the plurality of first floating point numbers and the plurality of second floating point numbers, performing the following operations: Step S301: Extract a sign bit, an exponent bit, and a floating point mantissa bit in the floating point number, where the floating point number is in binary representation. Step S302: Extract a second preset number of most significant mantissa bits from most significant bits of floating point mantissa bits. Step S303: Determine, based on the most significant mantissa bits and the sign bit of the floating point number, a fixed point number corresponding to the floating point number. Step S304: Determine, based on the exponent bit of the floating point number, an exponent corresponding to the floating point number.

Therefore, the computing apparatus of the present disclosure may convert an input floating point number into a fixed point number, thereby implementing perception-free conversion of floating point data into fixed point data and improving user experience. Besides, no additional resources are needed for data fixed point conversion processing, thereby saving computing resources.

First, the data extraction module 210 extracts sign bits, exponent bits, and floating point mantissa bits in each first floating point number a[i] and each second floating point number b[i] in parallel. The sign bits are recorded as a[i][31] and b[i][31] respectively, the exponent bits are recorded as a[i][30:23] and b[i][30:23] respectively, and the floating point mantissa bits are recorded as a[i][22:0] and b[i][22:0] respectively.

Then, a second preset number of most significant mantissa bits are extracted from most significant bits of floating point mantissa bits.

In some examples of the present application, the first fixed point number and the second fixed point number obtained through conversion may be fixed point data of 16 bits. Accordingly, the second preset number may be 14 bits, that is, data of 14 most significant bits may be extracted from a[i][22:0] and b[i][22:0] respectively, and obtained most significant mantissa bits are a[i][22:9] and b[i][22:9] respectively.

In some examples of the present application, a fixed point number corresponding to each floating point number may be obtained according to most significant mantissa bits and a sign bit based on the following formula:

$$a.us[i] = \left\{ 1'b0, 1'b1, a[i][22:9] \right\}, i \in [0, k-1]$$

$$b.\,us[i] = \left\{1'b0, 1'b1, b[i][22{:}9]\right\}, i \in [0, k-1]$$

where a.us[i] and b.us[i] respectively represent a first fixed point number and a second fixed point number corresponding to the first floating point number a[i] and the second floating point number b[i], and in data of two bits supplemented before a[i][22:9] and b[i][22:9], 1'b0 is a sign bit and 1'b1 is used to supplement an integer that is before a decimal point and that is omitted during storage of floating point data.

A first exponent a.e[i] and a second exponent b.e[i] respectively corresponding to the first fixed point number a.us[i] and the second fixed point number b.us[i] may be obtained based on the following formula:

$$a.\,e[i] = a[i][30{:}23], i \in [0, k-1]$$

$$b.\,e[i] = b[i][30{:}23], i \in [0, k-1]$$

In some examples of the present application, as shown in FIG. 4, the obtaining a fixed point product of each of the plurality of first fixed point numbers and a second fixed point number corresponding to the first fixed point number, and a corresponding fixed point product exponent may include: Step S401: Obtain a plurality of first complements corresponding to the plurality of first fixed point numbers and a plurality of second complements corresponding to the plurality of second fixed point numbers. Step S402: Calculate a product of each of the plurality of first complements and a second complement corresponding to the first complement, to obtain the fixed point product. Step S403: Calculate a sum of a first exponent corresponding to each of the plurality of first fixed point numbers and a second exponent corresponding to a second fixed point number corresponding to the first fixed point number, to obtain the fixed point product exponent.

Therefore, complement conversion is performed on the fixed point number for a subsequent operation, so that the sign bit also participates in the operation and there is no need to calculate the sign bit separately, thereby saving computing resources.

In some examples of the present application, based on sign bits a[i][31] and b[i][31] respectively corresponding to the first floating point number a[i] and the second floating point number b[i], the first complement a.s[i] and the second complement b.s[i] respectively corresponding to the first fixed point number a.us[i] and the second fixed point number b.us[i] may be obtained based on the following formula:

$$a.\,s[i] = \begin{cases} a.\,us[i], & if\ a[i][31] == 1'b0 \\ 1 - a.\,us[i], & if\ a[i][31] == 1'b1, \end{cases} i \in [0, k-1]$$

$$b.\,s[i] = \begin{cases} b.\,us[i], & if\ b[i][31] == 1'b0 \\ 1 - b.\,us[i], & if\ b[i][31] == 1'b1, \end{cases} i \in [0, k-1]$$

In this way, the data extraction module 210 may correspondingly obtain each first fixed point number a.us[i] and a complement a.s[i] thereof and each second fixed point number b.us[i] and a complement b.s[i] thereof for each first floating point number a[i] in the first vector A and each second floating point number b[i] in the second vector B, and transmit each first fixed point number a.us[i] and a complement a.s[i] thereof and each second fixed point number b.us[i] and a complement b.s[i] thereof to the fixed point multiplication module 220. Meanwhile, the data extraction module may transmit each first exponent a.e[i] and each second exponent b.e[i] to the exponent comparison module 230.

In some examples of the present application, the fixed point multiplication module 220 may include a fixed point multiplication submodule of k groups of fixed point data of 16 bits, and input data of the fixed point multiplication module 220 may be each first fixed point number a.us[i] and each second fixed point number b.us[i]. Besides, the fixed point multiplication module may multiply a corresponding first fixed point number and second fixed point number, to obtain a corresponding fixed point product. A sign of the fixed point product needs to be determined based on sign bits of a first floating point number and a second floating point number corresponding to the first fixed point number and the second fixed point number.

In some examples of the present application, the fixed point multiplication module 220 may include a fixed point multiplication submodule of k groups of fixed point data of 16 bits, and input data of the fixed point multiplication module 220 may also be the first complement a.s[i] corresponding to each first fixed point number and the second complement b.s[i] corresponding to each second fixed point number. A corresponding first complement a.s[i] and second complement b.s[i] in each pair are multiplied to obtain a fixed point product m[i]. A specific formula is as follows:

$$m[i] = a.s[i] * b.s[i], \qquad i \in [0, k-1]$$

Each fixed point product m[i] is 32 bits.

At the same time, correspondingly, the exponent comparison module 230 may obtain a fixed point product exponent ab.e[i] corresponding to each fixed point product m[i]. A specific formula is as follows:

$$ab.e[i] = a.e[i] + b.e[i], i \in [0, k-1]$$

Because exponents corresponding to fixed point products are different, fixed point products first need to be unified to fall within a same value range before fixed point products are added. For example, mantissa bits of two fixed point products are both 1001, but values corresponding to exponents of the fixed point products are 2 and -2. In this case, actual values of the fixed point products are 100.1 and 0.01001 respectively (that is, the two fixed point products are shifted and aligned based on the exponent 0, so that the two fixed point products are unified to fall within a same value range), and a subsequent addition calculation result is correct.

In related technologies, before data input, a maximum value in each vector is first obtained and a value range of each piece of data in the vector is unified based on the maximum value. As a result, data loses great precision again after being converted to fixed point data.

In some examples of the present application, the obtaining a fixed point inner product calculation result of the first vector and the second vector based on a fixed point product exponent corresponding to each of a plurality of fixed point products corresponding to the plurality of first fixed point numbers includes: arithmetically shifting the fixed point product based on the fixed point product exponent corresponding to each of the plurality of fixed point products corresponding to the plurality of first fixed point numbers; and adding a plurality of arithmetically shifted fixed point products corresponding to the plurality of first fixed point numbers, to obtain the fixed point inner product calculation result of the first vector and the second vector.

Therefore, after each fixed point product is obtained and before the fixed point inner product calculation result is calculated, each fixed point product is shifted to unify a value range of each fixed point product. This can reduce the loss of data precision and improve calculation precision compared with the method in the related technologies.

In some examples of the present application, each fixed point product and each fixed point product exponent may be correspondingly input into the shift module 240, so that each fixed point product may be arithmetically shifted based on a corresponding fixed point product exponent, to align fixed point products to fall within a same value range. Then, the aligned fixed point products are input into the adder 250 to obtain the fixed point inner product calculation result of the first vector and the second vector.

In some examples of the present application, the arithmetically shifting the fixed point product based on the fixed point product exponent corresponding to each of the plurality of fixed point products corresponding to the plurality of first fixed point numbers includes: determining a first fixed point product exponent in a plurality of fixed point product exponents corresponding to the plurality of first fixed point numbers; obtaining, based on each of the plurality of fixed point product exponents and the first fixed point product exponent, an arithmetic shift value corresponding to each of the plurality of fixed point products; and arithmetically shifting the fixed point product based on the arithmetic shift value corresponding to each of the plurality of fixed point products.

In some examples of the present application, the first fixed point product exponent may be determined in all fixed point product exponents as the reference for arithmetic shift. A shift distance corresponding to each fixed point product is determined by calculating a difference between another fixed point product exponent and the first fixed point product exponent. Therefore, the operation can be further simplified, the operation efficiency can be improved, and computing resources can be saved.

In some examples of the present application, the determining a first fixed point product exponent in a plurality of fixed point product exponents corresponding to the plurality of first fixed point numbers includes: obtaining, as the first fixed point product exponent, the largest fixed point product exponent of the plurality of fixed point product exponents corresponding to the plurality of first fixed point numbers; and the obtaining, based on each of the plurality of fixed point product exponents and the first fixed point product exponent, an arithmetic shift value corresponding to each of the plurality of fixed point products includes: calculating a difference between the first fixed point product exponent and each of the plurality of fixed point product exponents as a corresponding arithmetic shift value of a fixed point product corresponding to the fixed point product exponent.

Therefore, the first fixed point product exponent, that is, the reference exponent, is determined as the maximum exponent of all exponents, so that this can avoid great precision loss of data with a large actual value and ensure calculation precision.

In some examples of the present application, the exponent comparison module 230 may first obtain the maximum exponent of all fixed point product exponents ab.e[i] as the first fixed point product exponent ab.e.max. A specific formula is as follows:

$$ab.e.max = \max{(ab.e[i])}$$

Then, each arithmetic shift value sft[i] is obtained by calculating a difference between the first fixed point product exponent ab.e.max and each fixed point product exponent ab.e[i]. A specific formula is as follows:

$$sft[i] = ab.e.max - ab.e[i], i \in [0, k-1]$$

Each arithmetic shift value sft[i] output by the exponent comparison module 230 and each fixed point product m[i] output by the fixed point multiplication module 220 are input into the shift module 240, and the shift module 240 performs arithmetical right shift processing on each fixed point product m[i] based on an arithmetic shift value sft[i] corresponding to the fixed point product m[i], to obtain a corresponding arithmetically shifted fixed point product m.s[i]. A specific formula is as follows:

$$m.s[i] = m[i] \ggg sft[i], i \in [0, k-1]$$

In some examples of the present application, each arithmetically shifted fixed point product m.s[i] output by the shift module 240 may be input into the adder 250, and the adder 250 adds arithmetically shifted fixed point products, so as to obtain a fixed point inner product calculation result s.i of the first vector A and the second vector B. A specific formula is as follows:

$$s.i = sum(m.s[i]), i \in \left[0, k-1\right]$$

The fixed point inner product calculation result s.i is signed fixed point data of (32+j) bits, where j is determined based on the following formula:

$$j = ceiling(log_2 k)$$

*ceiling(x)* is a function used to round up data. In this way, more bits are set for the fixed point inner product calculation result s.i to prevent data overflow during addition.

In some examples of the present application, the inverse fixed point conversion module 260 may perform processing to obtain, based on the fixed point inner product calculation result, a floating point inner product calculation result in a floating point data format corresponding to the fixed point inner product calculation result.

The adder 250 transmits the fixed point inner product calculation result s.i to the inverse fixed point conversion module 260, and the inverse fixed point conversion module 260 first converts the fixed point inner product calculation result s.i to equal data s.f in a floating point format.

At the same time, the exponent comparison apparatus 230 transmits the first fixed point product exponent ab.e.max to the inverse fixed point conversion module 260, and the inverse fixed point conversion module 260 converts the first fixed point product exponent ab.e.max into exponent data d.f in a floating point format. A specific formula is as follows:

$$d.f\left[31\right] = 1'b0$$

$$d.f[30:23] = \text{ab. e. max} - 282$$

$$d.f[22:0] = 23'b0$$

Then, a floating point multiplier in the inverse fixed point conversion module 260 calculates a product of s.f and d.f, to obtain a floating point inner product calculation result res in a floating point data format of the first vector and the second vector. A specific formula is as follows:

$$res = d.f * s.f$$

In some examples of the present application, the computing apparatus can calculate an inner product of two vectors with a first predetermined length in one computing cycle, and for a third vector and a fourth vector with a same vector length larger than the first predetermined length, the method further includes: dividing the third vector and the fourth vector into a plurality of first vectors and a plurality of second vectors based on the first predetermined length, where the plurality of first vectors and the plurality of second vectors are in a one-to-one correspondence; calculating floating point inner product calculation results of a plurality of groups of first vectors and second vectors that correspond to each other; and calculating a sum of the floating point inner product calculation results of the plurality of groups of first vectors and second vectors that correspond to each other, to obtain an inner product calculation result of the third vector and the fourth vector.

Therefore, an input vector is divided and input into the computing apparatus in different computing cycles, and results obtained in all the computing cycles are accumulated, to calculate an inner product of larger vectors.

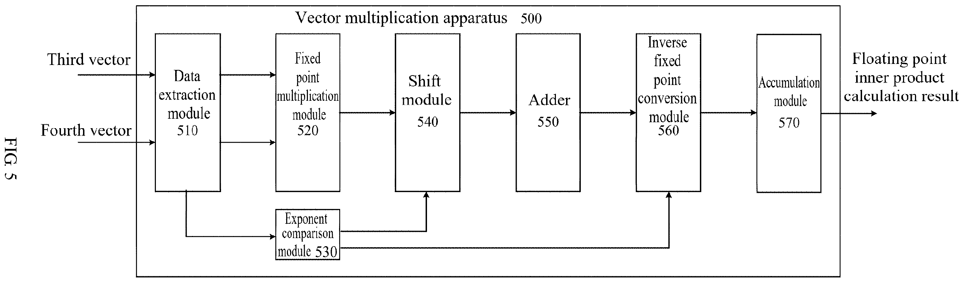

FIG. 5 is a structural block diagram of a vector multiplication apparatus according to another example of the present disclosure.

In some examples of the present application, a vector multiplication apparatus 500 shown in FIG. 5 may be an computing apparatus arranged on a chip, and the above computing method may be performed by the vector multiplication apparatus 500. Specifically, the vector multiplication apparatus 500 includes a data extraction module 510, a fixed point multiplication module 520, an exponent comparison module 530, a shift module 540, an adder 550, an inverse fixed point conversion module 560, and an accumulation module 570.

Operations of the module 510 to the module 560 in the vector multiplication apparatus 500 are similar to those of the module 210 to the module 260 in the vector multiplication apparatus 200. Details are not described herein again.

In some examples of the present application, the data extraction module 510 may sequentially extract, in each computing cycle, a first vector and a second vector of a first predetermined length from a third vector and a fourth vector input into the vector multiplication apparatus 500, obtain a floating point inner product calculation result of the first vector and the second vector in the computing cycle, and store the floating point inner product calculation result in the accumulation module 570. After obtaining each floating point inner product calculation result, the accumulation module 570 calculates a sum of all floating point inner product calculation results, so that an inner product calculation result in a floating point format of the third vector and the fourth vector may be obtained.

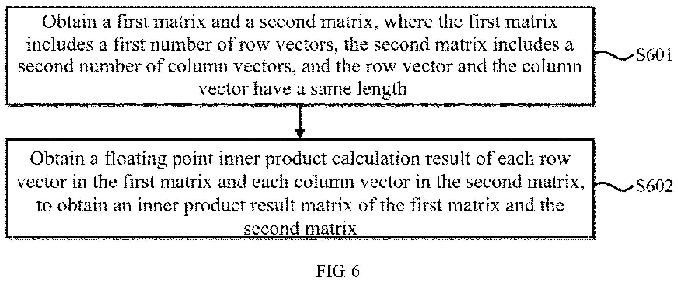

In some examples of the present application, a computing method performed by an computing apparatus to calculate a product of matrices is further provided, as shown in FIG. 6, including: Step S601: Obtain a first matrix and a second matrix, where the first matrix includes a first number of row vectors, the second matrix includes a second number of column vectors, and the row vector and the column vector have a same length. Step S602: Obtain an inner product result of each row vector in the first matrix and each column vector in the second matrix according to the above computing method for calculating an inner product of vectors, to obtain an inner product result matrix of the first matrix and the second matrix.

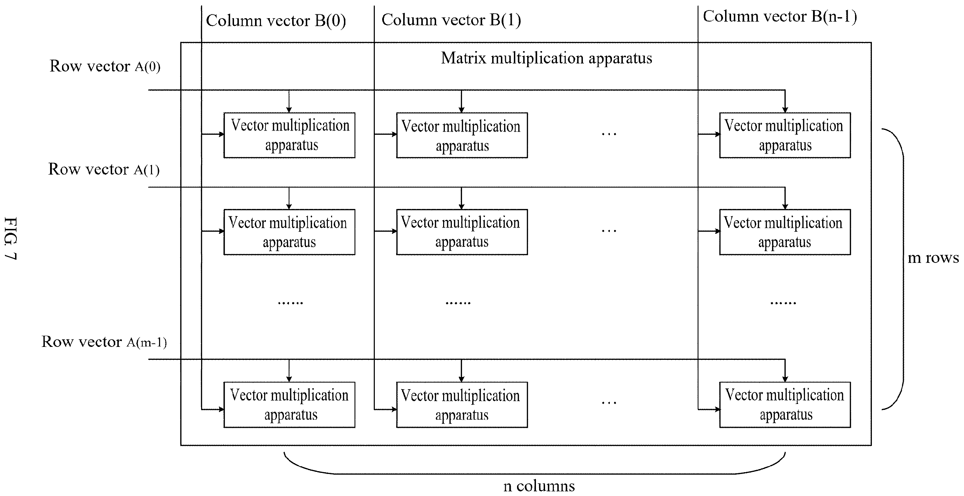

FIG. 7 is a structural block diagram of a matrix multiplication apparatus according to an example of the present disclosure.

In some examples of the present application, a matrix multiplication apparatus shown in FIG. 7 may be an computing apparatus arranged on a chip, and the above computing method for calculating a product of matrices may be performed by the matrix multiplication apparatus.

A first matrix includes m row vectors A(0), A(1), ..., and A(m-1), and a second matrix includes n column vectors B(0), B(1), ..., and B(n-1). The matrix multiplication apparatus shown in FIG. 7 includes m × n vector multiplication apparatuses. Each vector multiplication apparatus may be the vector multiplication apparatus 200 shown in FIG. 2 or the vector multiplication apparatus 500 shown in FIG. 5. Each vector multiplication apparatus may calculate a vector inner product of a row vector A and a column vector B through the above computing method for calculating an inner product of vectors, and then a calculation result of each vector multiplication apparatus is obtained to obtain an inner product result matrix of the first matrix and the second matrix.

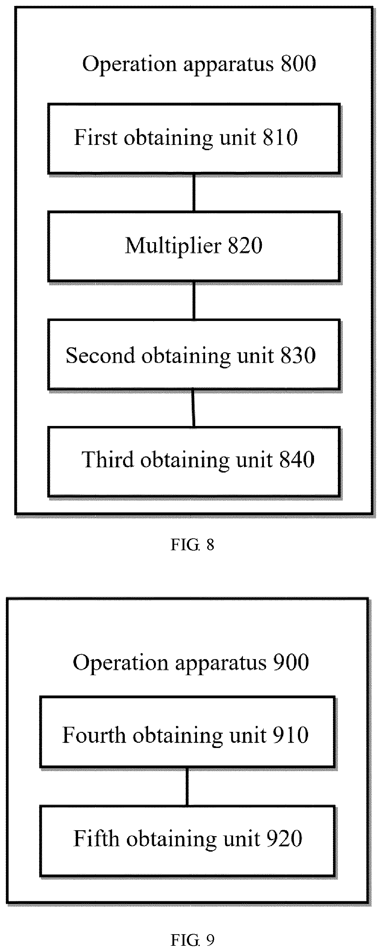

In some examples of the present application, as shown in FIG. 8, a computing apparatus 800 is provided, including: a first obtaining unit 810 configured to: based on a plurality of first floating point numbers of a first vector and a plurality of second floating point numbers of a second vector that are input to a computing apparatus, obtain a plurality of first fixed point numbers in binary representation and a plurality of first exponents that correspond to the plurality of first floating point numbers, and a plurality of second fixed point numbers in binary representation and a plurality of second exponents that correspond to the plurality of second floating point numbers, where the plurality of first floating point numbers and the plurality of second floating point numbers are in a one-to-one correspondence, and each of the plurality of first fixed point number and the plurality of second fixed point numbers includes a sign bit and a first preset number of fixed point mantissa bits; a multiplier 820 configured to obtain a fixed point product of each of the plurality of first fixed point numbers and a second fixed point number corresponding to the first fixed point number, and a corresponding fixed point product exponent; a second obtaining unit 830 configured to obtain a fixed point inner product calculation result of the first vector and the second vector based on a fixed point product exponent corresponding to each of a plurality of fixed point products corresponding to the plurality of first fixed point numbers; and a third obtaining unit 840 configured to obtain, based on the fixed point inner product calculation result, a floating point inner product calculation result in a floating point data format corresponding to the fixed point inner product calculation result.

Operations of the unit 810 to the unit 840 of the computing apparatus 800 are similar to those of step S101 to step S104 of the above-mentioned computing method executed by the computing apparatus. Details are not described herein again.

In some examples of the present application, the second obtaining unit may include: a shifter configured to arithmetically shift the fixed point product based on the fixed point product exponent corresponding to each of the plurality of fixed point products corresponding to the plurality of first fixed point numbers; and an adder configured to add a plurality of arithmetically shifted fixed point products corresponding to the plurality of first fixed point numbers, to obtain the fixed point inner product calculation result of the first vector and the second vector.

According to some examples of the present application, the shifter may include: a determining module configured to determine a first fixed point product exponent in a plurality of fixed point product exponents corresponding to the plurality of first fixed point numbers; an obtaining module configured to obtain, based on each of the plurality of fixed point product exponents and the first fixed point product exponent, an arithmetic shift value corresponding to each of the plurality of fixed point products; and a shift module configured to arithmetically shift the fixed point product based on the arithmetic shift value corresponding to each of the plurality of fixed point products.

In some examples of the present application, the determining module may be configured to: obtain, as the first fixed point product exponent, the largest fixed point product exponent of the plurality of fixed point product exponents corresponding to the plurality of first fixed point numbers; and the obtaining module may be configured to: calculate a difference between the first fixed point product exponent and each of the plurality of fixed point product exponents as a corresponding arithmetic shift value of a fixed point product corresponding to the fixed point product exponent.

In some examples of the present application, the first obtaining unit may be configured to: for each of the plurality of first floating point numbers and the plurality of second floating point numbers, perform operations of the following subunits: a first extraction subunit configured to extract a sign bit, an exponent bit, and a floating point mantissa bit in the floating point number, where the floating point number is in binary representation; a second extraction subunit configured to extract a second preset number of most significant mantissa bits from most significant bits of floating point mantissa bits; a first determining subunit configured to determine, based on the most significant mantissa bits, a fixed point number corresponding to the floating point number; and a second determining subunit configured to determine, based on the exponent bit of the floating point number, an exponent corresponding to the floating point number.

According to some embodiments, the multiplier may include: an obtaining subunit configured to: based on sign bits of the plurality of first floating point numbers corresponding to the plurality of first fixed point numbers and sign bits of the plurality of second floating point numbers corresponding to the plurality of second fixed point numbers, obtain a plurality of first complements corresponding to the plurality of first fixed point numbers and a plurality of second complements corresponding to the plurality of second fixed point numbers; a first calculation subunit configured to calculate a product of each of the plurality of first complements and a second complement corresponding to the first complement, to obtain the fixed point product; and a second calculation subunit configured to calculate a sum of a first exponent corresponding to each of the plurality of first fixed point numbers and a second exponent corresponding to a second fixed point number corresponding to the first fixed point number, to obtain the fixed point product exponent.

In some examples of the present application, the computing apparatus can calculate an inner product of two vectors with a first predetermined length in one computing cycle, and for a third vector and a fourth vector with a same vector length larger than the first predetermined length, the computing apparatus may further include: a division unit configured to divide the third vector and the fourth vector into a plurality of first vectors and a plurality of second vectors based on the first predetermined length, where the plurality of first vectors and the plurality of second vectors are in a one-to-one correspondence; a first calculation unit configured to calculate floating point inner product calculation results of a plurality of groups of first vectors and second vectors that correspond to each other; and a second calculation unit configured to calculate a sum of the floating point inner product calculation results of the plurality of groups of first vectors and second vectors that correspond to each other, to obtain an inner product calculation result of the third vector and the fourth vector.

According to some examples of the present application, as shown in FIG. 9, a computing apparatus 900 is further provided, including: a fourth obtaining unit 910 configured to obtain a first matrix and a second matrix, where the first matrix includes a first number of row vectors, the second matrix includes a second number of column vectors, and the row vector and the column vector have a same length; and a fifth obtaining unit 920 configured to obtain an inner product result of each row vector in the first matrix and each column vector in the second matrix according to the above computing method executed by the computing apparatus to calculate an inner product of vectors, to obtain an inner product result matrix of the first matrix and the second matrix.

Operations of the unit 910 and the unit 920 of the computing apparatus 900 are similar to those of step S601 and step S602 of the above-mentioned computing method executed by the computing apparatus to calculate a product of matrices. Details are not described herein again.

In some examples of the present application, a chip is provided, including at least one of the following apparatuses: the above computing apparatus for calculating an inner product of vectors and the above computing apparatus for calculating an inner product of matrices.

According to some examples of the present application, an electronic device is provided, including the above chip.

According to some examples of the present application, an electronic device is provided, including: at least one processor; and a memory communicatively connected to the at least one processor, where the memory stores instructions executable by the at least one processor, and when executed by the at least one processor, the instructions cause the at least one processor to perform the above computing method for calculating an inner product of vectors or the above computing method for calculating an inner product of matrices.

According to some examples of the present application, a non-transitory computer-readable storage medium storing computer instructions is provided, where the computer instructions are used to cause a computer to perform the above computing method for calculating an inner product of vectors or the above computing method for calculating an inner product of matrices.

According to some examples of the present application, a computer program product is provided, including a computer program, where when the computer program is executed by a processor, the above computing method for calculating an inner product of vectors or the above computing method for calculating an inner product of matrices is implemented.

According to some examples of the present application, an electronic device, a readable storage medium, and a computer program product are further provided.

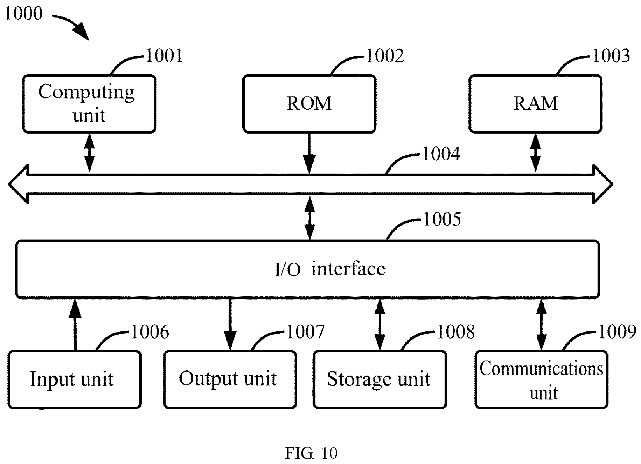

Referring to FIG. 10, a structural block diagram of an electronic device 1000 that may serve as a server or a client of the present disclosure is now described, which is an example of a hardware device that may be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 10, the electronic device 1000 includes a computing unit 1001, which may perform various appropriate actions and processing according to a computer program stored in a read-only memory (ROM) 1002 or a computer program loaded from a storage unit 1008 to a random access memory (RAM) 1003. The RAM 1003 may further store various programs and data required for the operation of the electronic device 1000. The computing unit 1001, the ROM 1002, and the RAM 1003 are connected to each other through a bus 1004. An input/output (I/O) interface 1005 is also connected to the bus 1004.

A plurality of components in the electronic device 1000 are connected to the I/O interface 1005, including: an input unit 1006, an output unit 1007, the storage unit 1008, and a communications unit 1009. The input unit 1006 may be any type of device capable of entering information to the electronic device 1000. The input unit 1006 can receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 1007 may be any type of device capable of presenting information, and may include, but is not limited to, a display, a speaker, a video/audio output terminal, a vibrator, and/or a printer. The storage unit 1008 may include, but is not limited to, a magnetic disk and an optical disc. The communications unit 1009 allows the electronic device 1000 to exchange information/data with other devices via a computer network such as the Internet and/or various telecommunications networks, and may include, but is not limited to, a modem, a network interface card, an infrared communications device, and a wireless communications transceiver and/or a chipset, for example, a Bluetooth™ device, an 802.11 device, a Wi-Fi device, a WiMax device, a cellular communications device, and/or the like.

The computing unit 1001 may be various general-purpose and/or special-purpose processing components with processing and computing capabilities. Some examples of the computing unit 1001 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 1001 performs the various methods and processing described above, for example, the above computing method for calculating an inner product of vectors or the above computing method for calculating an inner product of matrices. For example, In some examples of the present application, the above computing method for calculating an inner product of vectors or the above computing method for calculating an inner product of matrices may be implemented as a computer software program, which is tangibly contained in a machine-readable medium, such as the storage unit 1008. In some examples of the present application, a part or all of the computer programs may be loaded and/or installed onto the electronic device 1000 via the ROM 1002 and/or the communications unit 1009. When the computer program is loaded onto the RAM 1003 and executed by the computing unit 1001, one or more steps of the above computing method for calculating an inner product of vectors or the above computing method for calculating an inner product of matrices described above can be performed. Alternatively, in other examples, the computing unit 1001 may be configured, by any other suitable means (for example, by means of firmware), to perform the above computing method for calculating an inner product of vectors or the above computing method for calculating an inner product of matrices.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: The systems and technologies are implemented in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), and the Internet.

A computer system may include a client and a server. The client and the server are generally far away from each other and usually interact through a communications network. A relationship between the client and the server is generated by computer programs running on respective computers and having a client-server relationship with each other. The server may be a cloud server, a server in a distributed system, or a server combined with a blockchain.

It should be understood that steps may be reordered, added, or deleted based on the various forms of procedures shown above. For example, the steps recorded in the present disclosure may be performed in parallel, in order, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, system, and device described above are merely exemplary embodiments or examples, and the scope of the present invention is not limited by the embodiments or examples, but defined only by the granted claims and the equivalent scope thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

**Claims**

1. A computing method executed by a computing apparatus, comprising:

   obtaining(S101), based on a plurality of first floating point numbers of a first vector and a plurality of second floating point numbers of a second vector that are input to the computing apparatus, a plurality of first fixed point numbers in binary representation and a plurality of first exponents in binary representation that correspond to the plurality of first floating point numbers respectively, and a plurality of second fixed point numbers in binary representation and a plurality of second exponents in binary representation that correspond to the plurality of second floating point numbers respectively, wherein the plurality of first floating point numbers correspond to the plurality of second floating point numbers, and each of the plurality of first fixed point number and the plurality of second fixed point numbers comprises a sign bit and a first preset number of fixed point mantissa bits;
   obtaining(S102) a fixed point product and a fixed point product exponent corresponding to the fixed point product of each first fixed point number of the plurality of first fixed point numbers and a second fixed point number corresponding to the first fixed point number;
   obtaining(S103) a fixed point inner product calculation result of the first vector and the second vector based on the fixed point product exponent corresponding to each of a plurality of fixed point products corresponding to the plurality of first fixed point numbers; and
   obtaining(S104), based on the fixed point inner product calculation result, a floating point inner product calculation result in a floating point data format corresponding to the fixed point inner product calculation result.

2. The method according to claim 1, wherein the obtaining the fixed point inner product calculation result of the first vector and the second vector based on the fixed point product exponent corresponding to each of the plurality of fixed point products corresponding to the plurality of first fixed point numbers comprises:

   arithmetically shifting, based on the fixed point product exponent corresponding to each of the plurality of fixed point products corresponding to the plurality of first fixed point numbers, the fixed point product; and
   adding a plurality of arithmetically shifted fixed point products corresponding to the plurality of first fixed point numbers, to obtain the fixed point inner product calculation result of the first vector and the second vector.

3. The method according to claim 2, wherein the arithmetically shifting the fixed point product based on the fixed point product exponent corresponding to each of the plurality of fixed point products corresponding to the plurality of first fixed point numbers comprises:

   determining a first fixed point product exponent in a plurality of fixed point product exponents corresponding to the plurality of first fixed point numbers;

obtaining, based on each of the plurality of fixed point product exponents and the first fixed point product exponent, an arithmetic shift value corresponding to each of the plurality of fixed point products; and

arithmetically shifting the fixed point product based on the arithmetic shift value corresponding to each of the plurality of fixed point products.

**4.** The method according to claim 3, wherein the determining the first fixed point product exponent in the plurality of fixed point product exponents corresponding to the plurality of first fixed point numbers comprises:

obtaining, as the first fixed point product exponent, a largest fixed point product exponent of the plurality of fixed point product exponents corresponding to the plurality of first fixed point numbers; and

wherein the obtaining, based on each of the plurality of fixed point product exponents and the first fixed point product exponent, the arithmetic shift value corresponding to each of the plurality of fixed point products comprises:

calculating a difference between the first fixed point product exponent and each of the plurality of fixed point product exponents as the arithmetic shift value of the fixed point product corresponding to the fixed point product exponent.

**5.** The method according to any one of claims 1 to 4, wherein the obtaining the plurality of first fixed point numbers in binary representation and the plurality of first exponents in binary representation that correspond to the plurality of first floating point numbers respectively, and the plurality of second fixed point numbers in binary representation and the plurality of second exponents in binary representation that correspond to the plurality of second floating point numbers respectively comprises:

for each floating point number of the plurality of first floating point numbers and the plurality of second floating point numbers, performing the following operations:

extracting a sign bit, one or more exponent bits, and a plurality of floating point mantissa bits in the floating point number, wherein the floating point number is in binary representation;

extracting a second preset number of most significant mantissa bits from most significant bits of the plurality of floating point mantissa bits;

determining, based on the most significant mantissa bits, a fixed point number corresponding to the floating point number; and

determining, based on the one or more exponent bits of the floating point number, an exponent corresponding to the floating point number.

**6.** The method according to claim 5, wherein the obtaining the fixed point product and the fixed point product exponent corresponding to the fixed point product of each first fixed point number of the plurality of first fixed point numbers and the second fixed point number corresponding to the first fixed point number comprises:

obtaining, based on the sign bit of each of the plurality of first floating point numbers corresponding to the plurality of first fixed point numbers and the sign bit of each of the plurality of second floating point numbers corresponding to the plurality of second fixed point numbers, a plurality of first complements corresponding to the plurality of first fixed point numbers and a plurality of second complements corresponding to the plurality of second fixed point numbers;

calculating a product of each first complement of the plurality of first complements and a second complement corresponding to the first complement, to obtain the fixed point product; and

calculating a sum of a first exponent corresponding to each first fixed point number of the plurality of first fixed point numbers and a second exponent corresponding to a second fixed point number corresponding to the first fixed point number, to obtain the fixed point product exponent.

**7.** The method according to any one of claims 1 to 6, wherein the computing apparatus calculates an inner product of two vectors with a first predetermined length in one computing cycle, and for a third vector and a fourth vector with a same vector length larger than the first predetermined length, the method further comprises:

dividing the third vector and the fourth vector into a plurality of first vectors and a plurality of second vectors based on the first predetermined length, wherein the plurality of first vectors correspond to the plurality of second vectors respectively;

calculating a plurality of floating point inner product calculation results of a plurality of groups of a first vector and a second vector that correspond to each other; and

calculating a sum of the plurality of floating point inner product calculation results of the plurality of groups of the first vector and the second vector that correspond to each other, to obtain an inner product calculation result of the third vector and the fourth vector.

8. The method according to any one of claims 1 to 7, further comprising:

obtaining a first matrix and a second matrix, wherein the first matrix comprises a first number of row vectors, the second matrix comprises a second number of column vectors, and the row vector and the column vector have a same length; and

obtaining a floating point inner product calculation result of each row vector in the first matrix and each column vector in the second matrix, to obtain an inner product result matrix of the first matrix and the second matrix.

9. An operation apparatus(800), comprising:

a first obtaining unit(810) configured to obtain, based on a plurality of first floating point numbers of a first vector and a plurality of second floating point numbers of a second vector that are input to the computing apparatus, a plurality of first fixed point numbers in binary representation and a plurality of first exponents in binary representation that correspond to the plurality of first floating point numbers respectively, and a plurality of second fixed point numbers in binary representation and a plurality of second exponents in binary representation that correspond to the plurality of second floating point numbers respectively, wherein the plurality of first floating point numbers correspond to the plurality of second floating point numbers, and each of the plurality of first fixed point number and the plurality of second fixed point numbers comprises a sign bit and a first preset number of fixed point mantissa bits;

a multiplier(820) configured to obtain a fixed point product and a fixed point product exponent corresponding to the fixed point product of each first fixed point number of the plurality of first fixed point numbers and a second fixed point number corresponding to the first fixed point number;

a second obtaining unit(830) configured to obtain a fixed point inner product calculation result of the first vector and the second vector based on the fixed point product exponent corresponding to each of a plurality of fixed point products corresponding to the plurality of first fixed point numbers; and

a third obtaining unit(840) configured to obtain, based on the fixed point inner product calculation result, a floating point inner product calculation result in a floating point data format corresponding to the fixed point inner product calculation result.

10. The apparatus according to claim 9, wherein the second obtaining unit comprises:

a shifter configured to arithmetically shift, based on the fixed point product exponent corresponding to each of the plurality of fixed point products corresponding to the plurality of first fixed point numbers, the fixed point product; and

an adder configured to add a plurality of arithmetically shifted fixed point products corresponding to the plurality of first fixed point numbers, to obtain the fixed point inner product calculation result of the first vector and the second vector.

11. The apparatus according to claim 10, wherein the shifter comprises:

a determining module configured to determine a first fixed point product exponent in a plurality of fixed point product exponents corresponding to the plurality of first fixed point numbers;

an obtaining module configured to obtain, based on each of the plurality of fixed point product exponents and the first fixed point product exponent, an arithmetic shift value corresponding to each of the plurality of fixed point products; and

a shift module configured to arithmetically shift the fixed point product based on the arithmetic shift value corresponding to each of the plurality of fixed point products.

12. The apparatus according to claim 11, wherein the determining module is configured to:

obtain, as the first fixed point product exponent, a largest fixed point product exponent of the plurality of fixed point product exponents corresponding to the plurality of first fixed point numbers; and

the obtaining module is configured to:

calculate a difference between the first fixed point product exponent and each of the plurality of fixed point product exponents as the arithmetic shift value of the fixed point product corresponding to the fixed point product exponent.

13. The apparatus according to any one of claims 9 to 12, wherein the first obtaining unit is configured to: for each floating point number of the plurality of first floating point numbers and the plurality of second floating point numbers, perform operations of the following subunits:

a first extraction subunit configured to extract a sign bit, one or more exponent bits, and a plurality of floating point mantissa bits in the floating point number, wherein the floating point number is in binary representation;
a second extraction subunit configured to extract a second preset number of most significant mantissa bits from most significant bits of the plurality of floating point mantissa bits;
a first determining subunit configured to determine, based on the most significant mantissa bits, a fixed point number corresponding to the floating point number; and
a second determining subunit configured to determine, based on the one or more exponent bits of the floating point number, an exponent corresponding to the floating point number.

14. A non-transitory computer-readable storage medium storing computer instructions, wherein the computer instructions are used to cause a computer to perform the method according to any one of claims 1 to 8.

15. A computer program product, comprising a computer program, wherein when the computer program is executed by a processor, the method according to any one of claims 1 to 8 is implemented.

**Patentansprüche**

1. Rechenverfahren, das von einer Rechenvorrichtung ausgeführt wird, umfassend:

Erhalten (S101), anhand einer Vielzahl von ersten Gleitkommazahlen eines ersten Vektors und einer Vielzahl von zweiten Gleitkommazahlen eines zweiten Vektors, die in die Rechenvorrichtung eingegeben werden, einer Vielzahl von ersten Festkommazahlen in Binärdarstellung und einer Vielzahl von ersten Exponenten in Binärdarstellung, die jeweils der Vielzahl von ersten Gleitkommazahlen entsprechen, und eine Vielzahl von zweiten Festkommazahlen in Binärdarstellung und eine Vielzahl von zweiten Exponenten in Binärdarstellung, die jeweils der Vielzahl von zweiten Gleitkommazahlen entsprechen, wobei die Vielzahl von ersten Gleitkommazahlen der Vielzahl von zweiten Gleitkommazahlen entspricht, und jede der Vielzahl von ersten Festkommazahlen und der Vielzahl von zweiten Festkommazahlen ein Vorzeichenbit und eine erste voreingestellte Anzahl von Festkomma-Mantissenbits umfasst;
Erhalten (S102) eines Festkommaprodukts und eines Festkommaprodukt-Exponenten, die dem Festkommaprodukt jeder ersten Festkommazahl aus der Vielzahl von den ersten Festkommazahlen und einer zweiten Festkommazahl entsprechen, die der ersten Festkommazahl entspricht;
Erhalten (S103) eines Festkomma-Skalarprodukt-Berechnungsergebnisses des ersten Vektors und des zweiten Vektors anhand des Festkommaprodukt-Exponenten, der jedem einer Vielzahl von Festkommaprodukten entspricht, die der Vielzahl von ersten Festkommazahlen entsprechen; und
Erhalten (S104), anhand des Festkomma-Skalarprodukt-Berechnungsergebnisses, eines Gleitkomma-Skalarprodukt-Berechnungsergebnisses des Gleitkomma-Datenformats, das dem Festkomma-Skalarprodukt-Berechnungsergebnis entspricht.

2. Verfahren nach Anspruch 1, wobei das Erhalten des Festkomma-Skalarprodukt-Berechnungsergebnisses des ersten Vektors und des zweiten Vektors anhand des Festkommaprodukt-Exponenten, der jedem der Vielzahl von Festkommaprodukten entspricht, die der Vielzahl von ersten Festkommazahlen entsprechen, Folgendes umfasst:
arithmetisches Verschieben, anhand des Festkommaprodukt-Exponenten, der jedem der Vielzahl von Festkommaprodukten entspricht, die der Vielzahl von ersten Festkommazahlen entsprechen, des Festkommaprodukts; und
Addieren von einer Vielzahl von arithmetisch verschobenen Festkommaprodukten, die der Vielzahl von ersten Festkommazahlen entsprechen, um das Festkomma-Skalarprodukt-Berechnungsergebnis des ersten Vektors und des zweiten Vektors zu erhalten.

3. Verfahren nach Anspruch 2, wobei das arithmetische Verschieben des Festkommaprodukts anhand des Festkommaprodukt-Exponenten, der jedem der Vielzahl von Festkommaprodukten entspricht, die der Vielzahl von ersten Festkommazahlen entsprechen, Folgendes umfasst:

Bestimmen eines ersten Festkommaprodukt-Exponenten in einer Vielzahl von Festkommaprodukt-Exponenten, die der Vielzahl von ersten Festkommazahlen entsprechen;

Erhalten, anhand von jedem der Vielzahl von Festkommaprodukt-Exponenten und des ersten Festkommaprodukt-Exponenten, eines arithmetischen Verschiebungswerts, der jedem der Vielzahl von Festkommaprodukten entspricht; und

arithmetisches Verschieben des Festkommaprodukts anhand des arithmetischen Verschiebungswerts, der jedem der Vielzahl von Festkommaprodukten entspricht.

4. Verfahren nach Anspruch 3, wobei das Bestimmen des ersten Festkommaprodukt-Exponenten in der Vielzahl von Festkommaprodukt-Exponenten, die der Vielzahl von ersten Festkommazahlen entsprechen, Folgendes umfasst:

Erhalten, als ersten Festkommaprodukt-Exponenten, eines größten Festkommaprodukt-Exponenten aus der Vielzahl von Festkommaprodukt-Exponenten, die der Vielzahl von ersten Festkommazahlen entsprechen; und wobei das Erhalten, anhand jedem der Vielzahl von Festkommaprodukt-Exponenten und des ersten Festkommaprodukt-Exponenten, des arithmetischen Verschiebungswerts, der jedem der Vielzahl von Festkommaprodukten entspricht, Folgendes umfasst; und

Berechnen einer Differenz zwischen dem ersten Festkommaprodukt-Exponenten und jedem der Vielzahl von Festkommaprodukt-Exponenten als den arithmetischen Verschiebungswert des Festkommaprodukts, der dem Festkommaprodukt-Exponenten entspricht.

5. Verfahren nach einem der Ansprüche 1 bis 4, wobei das Erhalten der Vielzahl von ersten Festkommazahlen in Binärdarstellung und der Vielzahl von ersten Exponenten in Binärdarstellung, die jeweils der Vielzahl von ersten Gleitkommazahlen entsprechen, und

die Vielzahl von zweiten Festkommazahlen in Binärdarstellung und die Vielzahl von zweiten Exponenten in Binärdarstellung, die jeweils der Vielzahl von zweiten Gleitkommazahlen entsprechen, Folgendes umfasst: für jede Gleitkommazahl aus der Vielzahl von ersten Gleitkommazahlen und der Vielzahl von zweiten Gleitkommazahlen, Durchführen der folgenden Vorgänge:

Extrahieren eines Vorzeichenbits, eines oder mehrerer Exponentenbits und einer Vielzahl von Gleitkomma-Mantissenbits in der Gleitkommazahl, wobei sich die Gleitkommazahl in Binärdarstellung befindet;

Extrahieren einer zweiten voreingestellten Anzahl von höchstwertigen Mantissenbits aus den höchstwertigen Bits der Vielzahl von Gleitkomma-Mantissenbits;

Bestimmen, anhand der höchstwertigen Mantissenbits, einer Festkommazahl, die der Gleitkommazahl entspricht; und

Bestimmen, anhand dem einen oder mehrerer Exponentenbits der Gleitkommazahl, eines Exponenten, der der Gleitkommazahl entspricht.

6. Verfahren nach Anspruch 5, wobei das Erhalten des Festkommaprodukts und des Festkommaprodukt-Exponenten, die dem Festkommaprodukt jeder ersten Festkommazahl aus der Vielzahl von den ersten Festkommazahlen und der zweiten Festkommazahl entsprechen, die der ersten Festkommazahl entspricht, Folgendes umfasst:

Erhalten, anhand dem Vorzeichenbit jeder der Vielzahl von ersten Gleitkommazahlen, die der Vielzahl von ersten Festkommazahlen entsprechen, und dem Vorzeichenbit jeder der Vielzahl von zweiten Gleitkommazahlen, die der Vielzahl von zweiten Festkommazahlen entsprechen, einer Vielzahl von ersten Komplementen, die der Vielzahl von ersten Festkommazahlen entsprechen, und einer Vielzahl von zweiten Komplementen, die der Vielzahl von zweiten Festkommazahlen entsprechen;

Berechnen eines Produkts jedes ersten Komplements der Vielzahl von ersten Komplemente und eines zweiten Komplements, das dem ersten Komplement entspricht, um das Festkommaprodukt zu erhalten; und Berechnen einer Summe eines ersten Exponenten, der jeder ersten Festkommazahl der Vielzahl von ersten Festkommazahlen entspricht, und eines zweiten Exponenten, der einer zweiten Festkommazahl entspricht, die der ersten Festkommazahl entspricht, um den Festkommaprodukt-Exponenten zu erhalten.

7. Verfahren nach einem der Ansprüche 1 bis 6, wobei die Rechenvorrichtung ein Skalarprodukt zweier Vektoren mit einer ersten vorbestimmten Länge in einem Rechenzyklus berechnet, und für einen dritten Vektor und einen vierten Vektor mit einer gleichen Vektorlänge, die größer als die erste vorbestimmte Länge ist, das Verfahren ferner umfasst:

Teilen des dritten Vektors und des vierten Vektors in eine Vielzahl von ersten Vektoren und eine Vielzahl von zweiten Vektoren anhand der ersten vorbestimmten Länge, wobei die Vielzahl von ersten Vektoren jeweils der Vielzahl von zweiten Vektoren entspricht;

Berechnen einer Vielzahl von Gleitkomma-Skalarprodukt-Berechnungsergebnissen einer Vielzahl von Gruppen eines ersten Vektors und eines zweiten Vektors, die einander entsprechen; und

Berechnen einer Summe der Vielzahl von Gleitkomma-Skalarprodukt-Berechnungsergebnissen der Vielzahl von Gruppen des ersten Vektors und des zweiten Vektors, die einander entsprechen, um ein Skalarprodukt-Berechnungsergebnis des dritten Vektors und des vierten Vektors zu erhalten.

8.  Verfahren nach einem der Ansprüche 1 bis 7, ferner umfassend:

Erhalten einer ersten Matrix und einer zweiten Matrix, wobei die erste Matrix eine erste Anzahl von Zeilenvektoren umfasst, die zweite Matrix eine zweite Anzahl von Spaltenvektoren umfasst und der Zeilenvektor und der Spaltenvektor die gleiche Länge aufweisen; und

Erhalten eines Gleitkomma-Skalarprodukt-Berechnungsergebnisses für jeden Zeilenvektor in der ersten Matrix und jeden Spaltenvektor in der zweiten Matrix, um eine Skalarprodukt-Ergebnismatrix der ersten Matrix und der zweiten Matrix zu erhalten.

9.  Betriebsvorrichtung (800), umfassend:

eine erste Erhaltungseinheit (810), die so konfiguriert ist, dass sie anhand einer Vielzahl von ersten Gleitkommazahlen eines ersten Vektors und einer Vielzahl von zweiten Gleitkommazahlen eines zweiten Vektors, die in die Rechenvorrichtung eingegeben werden, einer Vielzahl von ersten Festkommazahlen in Binärdarstellung und einer Vielzahl von ersten Exponenten in Binärdarstellung, die jeweils der Vielzahl von ersten Gleitkommazahlen entsprechen, und eine Vielzahl von zweiten Festkommazahlen in Binärdarstellung und eine Vielzahl von zweiten Exponenten in Binärdarstellung, die jeweils der Vielzahl von zweiten Gleitkommazahlen entsprechen, erhält, wobei die Vielzahl von ersten Gleitkommazahlen der Vielzahl von zweiten Gleitkommazahlen entspricht, und jede der Vielzahl von ersten Festkommazahlen und der Vielzahl von zweiten Festkommazahlen ein Vorzeichenbit und eine erste voreingestellte Anzahl von Festkomma-Mantissenbits umfasst;

einen Multiplizierer (820), der so konfiguriert ist, dass er ein Festkommaprodukt und eines Festkommaprodukt-Exponenten erhält, die dem Festkommaprodukt jeder ersten Festkommazahl aus der Vielzahl von den ersten Festkommazahlen und einer zweiten Festkommazahl entsprechen, die der ersten Festkommazahl entspricht;

eine zweite Erhaltungseinheit (830), die so konfiguriert ist, dass sie ein Festkomma-Skalarprodukt-Berechnungsergebnis des ersten Vektors und des zweiten Vektors anhand des Festkommaprodukt-Exponenten, der jedem einer Vielzahl von Festkommaprodukten entspricht, die der Vielzahl von ersten Festkommazahlen entsprechen, erhält; und

eine dritte Erhaltungseinheit (840), die so konfiguriert ist, dass sie, anhand des Festkomma-Skalarprodukt-Berechnungsergebnisses, ein Gleitkomma-Skalarprodukt-Berechnungsergebnis des Gleitkomma-Datenformats, das dem Festkomma-Skalarprodukt-Berechnungsergebnis entspricht, erhält.

10.  Vorrichtung nach Anspruch 7, wobei die zweite Erhaltungseinheit Folgendes umfasst:
einen Verschieber, der so konfiguriert ist, dass er, anhand des Festkommaprodukt-Exponenten, der jedem der Vielzahl von Festkommaprodukte entspricht, die der Vielzahl von ersten Festkommazahlen entsprechen, das Festkommaprodukt arithmetisch verschiebt; und einen Addierer, der so konfiguriert ist, dass er eine Vielzahl von arithmetisch verschobenen Festkommaprodukten, die der Vielzahl von ersten Festkommazahlen entsprechen, addiert, um das Festkomma-Skalarprodukt-Berechnungsergebnis des ersten Vektors und des zweiten Vektors zu erhalten.

11.  Vorrichtung nach Anspruch 10, wobei der Verschieber Folgendes umfasst:

ein Bestimmungsmodul, das so konfiguriert ist, dass es einen ersten Festkommaprodukt-Exponenten in einer Vielzahl von Festkommaprodukt-Exponenten bestimmt, die der Vielzahl von ersten Festkommazahlen entsprechen;

ein Erhaltungsmodul, das so konfiguriert ist, dass es anhand jedem der Vielzahl von Festkommaprodukt-Exponenten und des ersten Festkommaprodukt-Exponenten, einen arithmetischen Verschiebungswert erhält, der jedem der Vielzahl von Festkommaprodukten entspricht; und

ein Verschiebungsmodul, das so konfiguriert ist, dass es das Festkommaprodukt anhand des arithmetischen Verschiebungswerts, der jedem der Vielzahl von Festkommaprodukte entspricht, arithmetisch verschiebt.

**12.** Vorrichtung nach Anspruch 11, wobei das Bestimmungsmodul konfiguriert ist zum:

Erhalten, als ersten Festkommaprodukt-Exponenten, eines größten Festkommaprodukt-Exponenten aus der Vielzahl von Festkommaprodukt-Exponenten, die der Vielzahl von ersten Festkommazahlen entsprechen; und das Erhaltungsmodul konfiguriert ist zum:
Berechnen einer Differenz zwischen dem ersten Festkommaprodukt-Exponenten und jedem der Vielzahl von Festkommaprodukt-Exponenten als den arithmetischen Verschiebungswert des Festkommaprodukts, der dem Festkommaprodukt-Exponenten entspricht.

**13.** Vorrichtung nach einem der Ansprüche 9 bis 12, wobei die erste Erhaltungseinheit so konfiguriert ist, dass sie: für jede Gleitkommazahl aus der Vielzahl von ersten Gleitkommazahlen und der Vielzahl von zweiten Gleitkommazahlen Vorgänge der folgenden Untereinheiten durchführt:

eine erste Extraktionsuntereinheit, die so konfiguriert ist, dass sie ein Vorzeichenbit, ein oder mehrere Exponentenbits und eine Vielzahl von Gleitkomma-Mantissenbits in der Gleitkommazahl extrahiert, wobei sich die Gleitkommazahl in Binärdarstellung befindet;
eine zweite Extraktionsuntereinheit, die so konfiguriert ist, dass sie eine zweite voreingestellte Anzahl von höchstwertigen Mantissenbits aus höchstwertigen Bits der Vielzahl von Gleitkomma-Mantissenbits extrahiert;
eine erste Bestimmungsuntereinheit, die so konfiguriert ist, dass sie anhand der höchstwertigen Mantissenbits eine Festkommazahl bestimmt, die der Gleitkommazahl entspricht; und
eine zweite Bestimmungsuntereinheit, die so konfiguriert ist, dass sie anhand des einen oder mehrere Exponentenbits der Gleitkommazahl einen Exponenten bestimmt, der der Gleitkommazahl entspricht.

**14.** Nicht-flüchtiges, computerlesbares Speichermedium, das Computeranweisungen speichert, wobei die Computeranweisungen verwendet werden, um einen Computer zu veranlassen, das Verfahren nach einem der Ansprüche 1 bis 8 durchzuführen.

**15.** Computerprogrammprodukt, das ein Computerprogramm umfasst, wobei, wenn das Computerprogramm von einem Prozessor ausgeführt wird, das Verfahren nach einem der Ansprüche 1 bis 8 implementiert wird.

**Revendications**

**1.** Procédé informatique exécuté par un appareil informatique, le procédé comprenant :

l'obtention (S101), sur la base d'une pluralité de premiers nombres à virgule flottante d'un premier vecteur et d'une pluralité de seconds nombres à virgule flottante d'un deuxième vecteur qui sont saisies dans l'appareil informatique, d'une pluralité de premiers nombres à virgule fixe en représentation binaire et d'une pluralité de premiers exposants en représentation binaire qui correspondent à la pluralité de premiers nombres à virgule flottante respectivement, et d'une pluralité de seconds nombres à virgule fixe en représentation binaire et d'une pluralité de seconds exposants en représentation binaire qui correspondent à la pluralité de seconds nombres à virgule flottante respectivement, la pluralité de premiers nombres à virgule flottante correspondant à la pluralité de second nombres à virgule flottante, et chaque nombre, parmi la pluralité de premiers nombres à virgule fixe et la pluralité de seconds nombres à virgule fixe, comprenant un bit de signe et un premier nombre préétabli de bits de mantisse à virgule fixe ;
l'obtention (S102) d'un produit à virgule fixe et d'un exposant de produit à virgule fixe correspondant au produit à virgule fixe de chaque premier nombre à virgule fixe parmi la pluralité de premier nombres à virgule fixe et d'un second nombre à virgule fixe correspondant au premier nombre à virgule fixe ;
l'obtention (S 103) d'un résultat de calcul du produit interne à virgule fixe du premier vecteur et du deuxième vecteur sur la base de l'exposant de produit à virgule fixe correspondant à chaque produit parmi une pluralité de produits à virgule fixe correspondant à la pluralité de premiers nombres à virgule fixe ; et
l'obtention (S104), sur la base du résultat de calcul du produit interne à virgule fixe, d'un résultat de calcul du produit interne à virgule flottante dans un format de données à virgule flottante correspondant au résultat de calcul du produit interne à virgule fixe.

**2.** Le procédé selon la revendication 1, dans lequel l'obtention du résultat de calcul du produit interne à virgule fixe du premier vecteur et du deuxième vecteur, sur la base de l'exposant de produit à virgule fixe correspondant à chaque produit parmi la pluralité de produits à virgule fixe correspondant à la pluralité de premiers nombres à virgule fixe, comprend :

le décalage arithmétique, sur la base de l'exposant de produit à virgule fixe correspondant à chaque produit parmi la pluralité de produits à virgule fixe correspondant à la pluralité de premiers nombres à virgule fixe, du produit à virgule fixe ; et

l'addition d'une pluralité de produits à virgule fixe décalés arithmétiquement correspondant à la pluralité de premiers nombres à virgule fixe, afin d'obtenir le résultat de calcul du produit interne à virgule fixe du premier vecteur et du deuxième vecteur.

3. Le procédé selon la revendication 2, dans lequel le décalage arithmétique du produit à virgule fixe, sur la base de l'exposant de produit à virgule fixe correspondant à chaque produit parmi la pluralité de produits à virgule fixe correspondant à la pluralité de premiers nombres à virgule fixe, comprend :

la détermination d'un premier exposant de produit à virgule fixe dans une pluralité d'exposants de produit à virgule fixe correspondant à la pluralité de premiers nombres à virgule fixe ;

l'obtention, sur la base de chaque exposant parmi la pluralité d'exposants de produit à virgule fixe et du premier exposant de produit à virgule fixe, d'une valeur de décalage arithmétique correspondant à chaque produit parmi la pluralité de produits à virgule fixe ; et

le décalage arithmétique du produit à virgule fixe sur la base de la valeur de décalage arithmétique correspondant à chaque produit parmi la pluralité de produits à virgule fixe.

4. Le procédé selon la revendication 3, dans lequel la détermination du premier exposant de produit à virgule fixe, dans la pluralité d'exposants de produit à virgule fixe correspondant à la pluralité de premiers nombres à virgule fixe, comprend :

l'obtention, en tant que premier exposant de produit à virgule fixe, d'un exposant de produit à virgule fixe le plus grand parmi la pluralité d'exposants de produit à virgule fixe correspondant à la pluralité de premiers nombres à virgule fixe ; et

dans lequel l'obtention, sur la base de chaque exposant parmi la pluralité d'exposants de produit à virgule fixe et du premier exposant de produit à virgule fixe, de la valeur de décalage arithmétique correspondant à chaque produit parmi la pluralité de produits à virgule fixe, comprend :

le calcul d'une différence entre le premier exposant de produit à virgule fixe et chaque exposant parmi la pluralité d'exposants de produit à virgule fixe en tant que valeur de décalage arithmétique du produit à virgule fixe correspondant à l'exposant de produit à virgule fixe.

5. Le procédé selon l'une quelconque des revendications 1 à 4, dans lequel l'obtention de la pluralité de premiers nombres à virgule fixe en représentation binaire et de la pluralité de premiers exposants en représentation binaire qui correspondent à la pluralité de premiers nombres à virgule flottante respectivement, et de la pluralité de seconds nombres à virgule fixe en représentation binaire et de la pluralité de seconds exposants en représentation binaire qui correspondent à la pluralité de seconds nombres à virgule flottante respectivement, comprend :

pour chaque nombre à virgule flottante parmi la pluralité de premiers nombres à virgule flottante et la pluralité de second nombres à virgule flottante, la réalisation des opérations suivantes :

l'extraction d'un bit de signe, d'un ou plusieurs bits d'exposant et d'une pluralité de bits de mantisse à virgule flottante dans le nombre à virgule flottante, le nombre à virgule flottante étant en représentation binaire ;

l'extraction d'un second nombre préétabli de bits de mantisse les plus significatifs à partir des bits les plus significatifs parmi la pluralité de bits de mantisse à virgule flottante ;

la détermination, sur la base des bits de mantisse les plus significatifs, d'un nombre à virgule fixe correspondant au nombre à virgule flottante ; et

la détermination, sur la base du ou des bits d'exposant du nombre à virgule flottante, d'un exposant correspondant au nombre à virgule flottante.

6. Le procédé selon la revendication 5, dans lequel l'obtention du produit à virgule fixe et de l'exposant de produit à virgule fixe correspondant au produit à virgule fixe de chaque premier nombre à virgule fixe parmi la pluralité de premiers nombres à virgule fixe et du second nombre à virgule fixe correspondant au premier nombre à virgule fixe, comprend :

l'obtention, sur la base du bit de signe de chaque nombre parmi la pluralité de premiers nombres à virgule flottante correspondant à la pluralité de premiers nombres à virgule fixe, et du bit de signe de chaque nombre parmi la pluralité de seconds nombres à virgule flottante correspondant à la pluralité de seconds nombres à virgule fixe, d'une pluralité de premiers compléments correspondant à la pluralité de premiers nombres à virgule fixe et d'une pluralité de seconds compléments correspondant à la pluralité de seconds nombres à virgule fixe ;

le calcul d'un produit de chaque premier complément parmi la pluralité de premiers compléments et d'un second complément correspondant au premier complément, afin d'obtenir le produit à virgule fixe ; et

le calcul d'une somme d'un premier exposant correspondant à chaque premier nombre à virgule fixe parmi la pluralité de premiers nombres à virgule fixe et d'un second exposant correspondant à un second nombre à virgule fixe correspondant au premier nombre à virgule fixe, afin d'obtenir l'exposant de produit à virgule fixe.

7. Le procédé selon l'une quelconque des revendications 1 à 6, dans lequel l'appareil informatique calcule un produit interne de deux vecteurs présentant une première longueur prédéfinie dans un cycle de calcul, et pour un troisième vecteur et un quatrième vecteur présentant une même longueur de vecteur plus grande que la première longueur prédéfinie, le procédé comprend en outre :

la division du troisième vecteur et du quatrième vecteur en une pluralité de premiers vecteurs et une pluralité de deuxièmes vecteurs sur la base de la première longueur prédéfinie, la pluralité de premiers vecteurs correspondant à la pluralité de deuxièmes vecteurs respectivement ;

le calcul d'une pluralité de résultats de calcul du produit interne à virgule flottante d'une pluralité de groupes d'un premier vecteur et d'un deuxième vecteur qui correspondent l'un à l'autre ; et

le calcul d'une somme de la pluralité de résultats de calcul du produit interne à virgule flottante de la pluralité de groupes du premier vecteur et du deuxième vecteur qui correspondent l'un à l'autre, afin d'obtenir un résultat de calcul du produit interne du troisième vecteur et du quatrième vecteur.

8. Le procédé selon l'une quelconque des revendications 1 à 7, comprenant en outre :

l'obtention d'une première matrice et d'une seconde matrice, la première matrice comprenant un premier nombre de vecteurs de rangée, la seconde matrice comprenant un second nombre de vecteurs de colonne, et le vecteur de rangée et le vecteur de colonne présentant la même longueur ; et

l'obtention d'un résultat de calcul du produit interne à virgule flottante de chaque vecteur de rangée dans la première matrice et de chaque vecteur de colonne dans la seconde matrice, afin d'obtenir une matrice résultat de produit interne de la première matrice et de la seconde matrice.

9. Appareil d'opération (800), l'appareil comprenant :

une première unité d'obtention (810) conçue pour obtenir, sur la base d'une pluralité de premiers nombres à virgule flottante d'un premier vecteur et d'une pluralité de seconds nombres à virgule flottante d'un deuxième vecteur qui sont saisies dans l'appareil informatique, une pluralité de premiers nombres à virgule fixe en représentation binaire et une pluralité de premiers exposants en représentation binaire qui correspondent à la pluralité de premiers nombres à virgule flottante respectivement, et une pluralité de seconds nombres à virgule fixe en représentation binaire et une pluralité de seconds exposants en représentation binaire qui correspondent à la pluralité de seconds nombres à virgule flottante respectivement, la pluralité de premiers nombres à virgule flottante correspondant à la pluralité de second nombres à virgule flottante, et chaque nombre, parmi la pluralité de premiers nombres à virgule fixe et la pluralité de seconds nombres à virgule fixe, comprenant un bit de signe et un premier nombre préétabli de bits de mantisse à virgule fixe ;

un multiplicateur (820) conçu pour obtenir un produit à virgule fixe et un exposant de produit à virgule fixe correspondant au produit à virgule fixe de chaque premier nombre à virgule fixe parmi la pluralité de premier nombres à virgule fixe et d'un second nombre à virgule fixe correspondant au premier nombre à virgule fixe ;

une deuxième unité d'obtention (830) conçue pour obtenir un résultat de calcul du produit interne à virgule fixe du premier vecteur et du deuxième vecteur sur la base de l'exposant de produit à virgule fixe correspondant à chaque produit parmi une pluralité de produits à virgule fixe correspondant à la pluralité de premiers nombres à virgule fixe ; et

une troisième unité d'obtention (840) conçue pour obtenir, sur la base du résultat de calcul du produit interne à virgule fixe, un résultat de calcul du produit interne à virgule flottante dans un format de données à virgule flottante correspondant au résultat de calcul du produit interne à virgule fixe.

10. L'appareil selon la revendication 9, dans lequel la deuxième unité d'obtention comprend :

un décaleur conçu pour décaler arithmétiquement, sur la base de l'exposant de produit à virgule fixe correspondant à chaque produit parmi la pluralité de produits à virgule fixe correspondant à la pluralité de premiers nombres à virgule fixe, le produit à virgule fixe ; et

un additionneur conçu pour additionner une pluralité de produits à virgule fixe décalés arithmétiquement correspondant à la pluralité de premiers nombres à virgule fixe, afin d'obtenir le résultat de calcul du produit interne à virgule fixe du premier vecteur et du deuxième vecteur.

11. L'appareil selon la revendication 10, dans lequel le décaleur comprend :

un module de détermination conçu pour déterminer un premier exposant de produit à virgule fixe dans une pluralité d'exposants de produit à virgule fixe correspondant à la pluralité de premiers nombres à virgule fixe ;

un module d'obtention conçu pour obtenir, sur la base de chaque exposant parmi la pluralité d'exposants de produit à virgule fixe et du premier exposant de produit à virgule fixe, une valeur de décalage arithmétique correspondant à chaque produit parmi la pluralité de produits à virgule fixe ; et

un module de décalage conçu pour décaler arithmétiquement le produit à virgule fixe sur la base de la valeur de décalage arithmétique correspondant à chaque produit parmi la pluralité de produits à virgule fixe.

12. L'appareil selon la revendication 11, dans lequel le module de détermination est conçu :

pour obtenir, en tant que premier exposant de produit à virgule fixe, un exposant de produit à virgule fixe le plus grand parmi la pluralité d'exposants de produit à virgule fixe correspondant à la pluralité de premiers nombres à virgule fixe ; et

le module d'obtention est conçu :

pour calculer une différence entre le premier exposant de produit à virgule fixe et chaque exposant parmi la pluralité d'exposants de produit à virgule fixe en tant que valeur de décalage arithmétique du produit à virgule fixe correspondant à l'exposant de produit à virgule fixe.

13. L'appareil selon l'une quelconque des revendications 9 à 12, dans lequel la première unité d'obtention est conçue, pour chaque nombre à virgule flottante parmi la pluralité de premiers nombres à virgule flottante et la pluralité de second nombres à virgule flottante, pour effectuer les opérations des sous-unités suivantes :

une première sous-unité d'extraction conçue pour extraire un bit de signe, un ou plusieurs bits d'exposant et une pluralité de bits de mantisse à virgule flottante dans le nombre à virgule flottante, le nombre à virgule flottante étant en représentation binaire ;

une seconde sous-unité d'extraction conçue pour extraire un second nombre préétabli de bits de mantisse les plus significatifs à partir des bits les plus significatifs parmi la pluralité de bits de mantisse à virgule flottante ;

une première sous-unité de détermination conçue pour déterminer, sur la base des bits de mantisse les plus significatifs, un nombre à virgule fixe correspondant au nombre à virgule flottante ; et

une seconde sous-unité de détermination conçue pour déterminer, sur la base du ou des bits d'exposant du nombre à virgule flottante, un exposant correspondant au nombre à virgule flottante.

14. Support de stockage lisible par ordinateur non transitoire permettant de stocker des instructions d'ordinateur, les instructions d'ordinateur étant utilisées pour amener un ordinateur à effectuer le procédé selon l'une quelconque des revendications 1 à 8.

15. Produit programme d'ordinateur, comprenant un programme d'ordinateur, dans lequel, lorsque le programme d'ordinateur est exécuté par un processeur, le procédé selon l'une quelconque des revendications 1 à 8 est mis en oeuvre.

Obtain a plurality of first fixed point numbers in binary representation and a plurality of first exponents in binary representation that correspond to the plurality of first floating point numbers respectively, and a plurality of second fixed point numbers in binary representation and a plurality of second exponents in binary representation that correspond to the plurality of second floating point numbers respectively ~S101

Obtain a fixed point product and a fixed point product exponent and a second fixed point number corresponding to the first fixed point number ~S102

Obtain a fixed point inner product calculation result of the first vector and the second vector based on a fixed point product exponent corresponding to each of a plurality of fixed point products corresponding to the plurality of first fixed point numbers ~S103

Obtain, based on the fixed point inner product calculation result, a floating point inner product calculation result in a floating point data format corresponding to the fixed point inner product calculation result ~S104

FIG. 1

FIG. 2

Extract a sign bit, one or more exponent bits, and a plurality of floating point mantissa bits in the floating point number ~ S301

Extract a second preset number of most significant mantissa bits from most significant bits of the plurality of floating point mantissa bits ~ S302

Determine, based on the most significant value bits and the sign bit of the floating point number, a fixed point number corresponding to the floating point number ~ S303

Determine, based on the one or more exponent bits of the floating point number, an exponent corresponding to the floating point number ~ S304

FIG. 3

Obtain a plurality of first complements corresponding to the plurality of first fixed point numbers and a plurality of second complements corresponding to the plurality of second fixed point numbers ~ S401

Calculate a product of each of the plurality of first complements and a second complement corresponding to the first complement, to obtain the fixed point product ~ S402

Calculate a sum of a first exponent corresponding to each of the plurality of first fixed point numbers and a second exponent corresponding to a second fixed point number corresponding to the first fixed point number, to obtain the fixed point product exponent ~ S403

FIG. 4

FIG. 5

Obtain a first matrix and a second matrix, where the first matrix includes a first number of row vectors, the second matrix includes a second number of column vectors, and the row vector and the column vector have a same length ⌇ S601

Obtain a floating point inner product calculation result of each row vector in the first matrix and each column vector in the second matrix, to obtain an inner product result matrix of the first matrix and the second matrix ⌇ S602

FIG. 6

FIG. 7

Operation apparatus 800

First obtaining unit 810

Multiplier 820

Second obtaining unit 830

Third obtaining unit 840

FIG. 8

Operation apparatus 900

Fourth obtaining unit 910

Fifth obtaining unit 920

FIG. 9

1000

1001
Computing unit

1002
ROM

1003
RAM

1004

1005
I/O interface

1006
Input unit

1007
Output unit

1008
Storage unit

1009
Communications unit

FIG. 10